# EUROPÄISCHE PATENTSCHRIFT

(11) **EP 4 200 173 B1**
(45) Veröffentlichungstag und Bekanntmachung des Hinweises auf die Patenterteilung: **17.12.2025**
(21) Anmeldenummer: 21746682.0
(22) Anmeldetag: 19.07.2021
(51) Int. Cl.: B60T 7/12

(54) **VERFAHREN ZUM SICHERN EINES FAHRZEUGS**
METHOD FOR SECURING A VEHICLE
PROCÉDÉ PERMETTANT DE SÉCURISER UN VÉHICULE

(30) Priorität: 20.08.2020 DE 102020121831
(43) Veröffentlichungstag der Anmeldung: 28.06.2023
(73) Patentinhaber: ZF CV Systems Global GmbH, 3006 Bern (CH)
(72) Erfinder: KLOSTERMANN, Thilo, 30890 Barsinghausen (DE); MEYER, Rüdiger, 30449 Hannover (DE); ROTERS, Gerd, 31515 Wunstorf (DE); SCHMIDT, Thomas, 30419 Hannover (DE); WENDLANDT, Alexander, 30457 Hannover (DE)
(74) Vertreter: Ohlendorf, Henrike
(86) Internationale Anmeldenummer: PCT/EP2021/070080
(87) Internationale Veröffentlichungsnummer: WO 2022/037867

(56) Entgegenhaltungen:
- DE-A1- 102004 055 399
- DE-A1- 102007 052 439
- DE-A1- 102011 114 072
- DE-A1- 102016 207 284
- US-A1- 2019 263 423

## Beschreibung

Die Erfindung betrifft ein Verfahren zum Sichern eines Fahrzeugs, vorzugsweise Nutzfahrzeugs, bei einer Notbremssituation, wobei das Fahrzeug ein Fahrzeug-Bussystem und ein Bremssystem aufweist.

Zum Schutz der Insassen eines Fahrzeugs, insbesondere Nutzfahrzeugs, ist es vielfach wünschenswert, das Fahrzeug automatisiert zu bremsen. Insbesondere unmittelbar nach einem Unfall kann es hilfreich sein, das Fahrzeug zu bremsen, um beispielsweise ein Verschieben des Fahrzeugs bei einem weiteren Aufprall zu verhindern oder eine Bergung verunfallter Personen zu erleichtern. Oftmals besteht für Rettungskräfte bei Unfällen das Problem, dass vor einem Beginn der Menschenrettung das verunfallte Fahrzeug gesichert werden muss, um eine zusätzliche Gefährdung der Rettungskräfte auszuschließen. Abhängig vom Beladungszustand des Fahrzeugs und dem Unfallort kann hierfür Zeit und eine Vielzahl von Helfern benötigt werden, wodurch die Rettung verunfallter Personen verzögert wird. Besonders ausgeprägt ist dieses Problem bei Unfällen mit mehreren Fahrzeugen.

Insbesondere wenn Nutzfahrzeuge, wie beispielsweise Lastkraftwagen, am Unfallgeschehen beteiligt sind, ergibt sich häufig das Problem, dass ein Fahrer des Nutzfahrzeugs aus einer deformierten Kabine geborgen werden muss. Vielfach ist dabei der Einsatz hydraulischer Rettungszylinder nicht ausreichend, so dass eine Fahrerkabine des Nutzfahrzeugs auseinandergezogen werden muss, wobei eine vorherige Fixierung des Fahrzeugs unerlässlich ist. Ein weiteres Problem kann sich bei der Bergung von umgestürzten Anhängern oder Fahrzeugen ergeben, wenn die Räder des Fahrzeugs beim Aufstellen freigegeben sind und das Fahrzeug nach dem Aufstellen ins Rollen gerät. Insbesondere können Rettungskräfte gefährdet sein, wenn zum Aufstellen des Anhängers oder Fahrzeugs weitere Hilfsmittel, wie beispielsweise ein Kran oder eine Seilwinde, verwendet werden, die durch das Fahrzeug mitgerissen werden können.

Ferner besteht vor allem auf vielbefahrenen Straßen die Gefahr, dass ein stehendes Fahrzeug durch ein weiteres Fahrzeug getroffen und in ein drittes Fahrzeug geschoben wird, wodurch Fahrzeuginsassen eingeklemmt werden können.

Moderne Fahrzeuge sind häufig mit Notbremssystemen ausgestattet, die dazu ausgebildet sind, Gefahrensituationen zu erkennen und gegebenenfalls eine Notbremsung des Fahrzeugs einzuleiten. Im Zuge dieser Notbremsung wird das Fahrzeug dann bis zum Stillstand gebremst, wobei die Bremsen nach Erreichen des Stillstands gelöst werden. Um ein Fahrzeug auch im Stillstand zu bremsen, sind Verfahren bekannt, die eine Feststellbremse des Fahrzeugs in eine Bremsstellung bringen. So offenbart EP 2 214 940 B1 ein Verfahren zum Betreiben eines Kraftwagens, mit den Schritten: Erfassen, ob eine Notbremsung durchgeführt wurde, wenn ja, Erfassen, ob sich in einer Fahrtrichtung des Kraftwagens vor dem Kraftwagen ein Vorder-Fahrzeug befindet, wenn ja, Erfassen, ob der Kraftwagen steht, und wenn ja, bringen einer Feststellbremse in eine Bremsstellung. Nachteilig hieran ist, dass die Feststellbremse nur dann in eine Bremsstellung gebracht wird, wenn ein Vorder-Fahrzeug erfasst wird. Ferner muss eine Erfassungseinrichtung für das Vorder-Fahrzeug vorhanden und funktionsfähig sein. Vielfach kommt es jedoch bei einem Frontalaufprall dazu, dass eine entsprechende Erfassungseinrichtung beschädigt wird, und somit im Stillstand auch kein Vorder-Fahrzeug erfasst werden kann.

Aus DE 10 2007 052 439 A1 ist ein Fahrerassistenzsystem für Kraftwagen bekannt, das mindestens einen Betriebsdatensensor zum Erfassen von den momentanen oder zukünftigen Bewegungszustand des Kraftwagens charakterisierenden Betriebsdaten und eine elektrische Steuerung aufweist, die ausgebildet ist, bei einem Vorliegen von vorbestimmten Betriebsdaten eine autonome Notbremsung des Kraftwagens auszulösen. Ferner ist vorgesehen, dass die elektrische Steuerung eingerichtet ist, um unmittelbar vor, während oder nach einer Notbremsung eine Feststellbremse des Fahrzeugs in eine Aktivierungsstellung zu bringen, in der ein Stromausfall die Feststellbremse passiv in eine Bremsstellung bringt. Auch hier ist die Steuerung unmittelbar mit dem Betriebsdatensensor verbunden, sodass eine Funktionalität nicht gewährleistet werden kann, wenn das Fahrerassistenzsystem bei einem Unfall beschädigt wird. Sowohl die Notbremsung als auch das Bremsen im Stilstand basieren auf Befehlen der elektrischen Steuerung, sodass ein Ausfall der Steuerung mit einem Ausfall der gesamten Funktionalität einhergeht.

Die US2019263423A1 offenbart eine Steuervorrichtung enthaltend einen Empfänger und eine Steuerung. Der Empfänger empfängt einen Brems-Steuerbefehl von einem Bus, der zur Kommunikation unter einer Vielzahl elektronischer Steuereinheiten in einer beweglichen Vorrichtung benutzt wird. Die Steuerung führt die Steuerung durch, um den Brems-Steuerbefehl unter bestimmten Bedingungen zu annullieren oder zu verwerfen.

Die DE102011114072A1 betrifft ein Fahrerassistenzsystem für ein Fahrzeug mit einer Detektionseinrichtung, die eingerichtet ist zum Erfassen von den Fahrzustand des Fahrzeugs charakterisierenden Fahrdaten, sowie mit einer Steuerung, welche ausgebildet ist, um die von der Detektionseinrichtung erfassten Fahrdaten zu verarbeiten und bei einem Vorliegen von vorbestimmten Fahrdaten eine Bremseinrichtung zu veranlassen, eine autonome Bremsung des Fahrzeugs durchzuführen.

Die Aufgabe der vorliegenden Erfindung besteht daher darin, ein Verfahren zum Sichern eines Fahrzeugs anzugeben, das gegenüber dem Stand der Technik eine verbesserte Funktionalität und Sicherheit bei vorzugsweise geringeren Kosten ermöglicht. Insbesondere soll eine besonders hohe Ausfallsicherheit erreicht werden.

Die Erfindung löst die vorstehende Aufgabe in einem ersten Aspekt bei einem eingangs genannten Verfahren mit den Schritten: Überwachen von Signalen auf dem Fahrzeug-Bussystem; Detektieren eines Notbremssignals, das von einem Fahrerassistenzsystem auf dem Fahrzeug-Bussystem bereitgestellt wird; Ermitteln, ob sich das Fahrzeug in einem Stillstand befindet; Verbringen einer Bremseinrichtung des Bremssystems in eine Bremsstellung, wenn ein Stillstand des Fahrzeugs ermittelt wird.

Der Erfindung liegt die Erkenntnis zugrunde, dass Signale die auf dem Fahrzeug-Bussystem bereitgestellt werden, von mehreren mit dem Fahrzeug-Bussystem verbundenen Vorrichtungen oder Modulen des Fahrzeugs erfasst werden können. Fahrzeug-Bussysteme sind dadurch gekennzeichnet, dass eine Übertragung von Daten und/oder Signalen zwischen mehreren Teilnehmern über einen gemeinsamen Übertragungsweg durchgeführt wird. Dabei können auch mehrere Systeme das von einem Fahrerassistenzsystem auf dem Bussystem bereitgestellte Signal empfangen. Stellt nun das Fahrerassistenzsystem das Notbremssignal auf dem Fahrzeug-Bussystem bereit, so kann dieses Notbremssignal auch von einem oder mehreren Systemen oder Elementen erfasst werden, die das Fahrzeug-Bussystem überwachen. Hierdurch kann in vorteilhafter Weise eine Redundanz erreicht werden. Beispielsweise kann eine Bremseinrichtung des Bremssystems mittels eines anderen Systems und/oder Moduls auch dann in eine Bremsstellung gebracht werden, wenn das Fahrerassistenzsystem beschädigt ist. Ferner kann die Bremseinrichtung des Bremssystems in die Bremsstellung gebracht werden, wenn das Fahrzeug stillsteht und das Fahrerassistenzsystem nicht dazu ausgebildet ist, bei einem Stillstand des Fahrzeugs die Bremseinrichtung in die Bremsstellung zu bringen. Das erfindungsgemäße Verfahren eignet sich also insbesondere auch zum Durchführen mittels nachgerüsteter Systeme und/oder Module. Es kann jedoch auch vorgesehen sein, dass das Verfahren mittels eines vorhandenen Systems und/oder einer vorhandenen Komponente des Fahrzeugs, insbesondere des Bremssystems, durchgeführt wird.

Das Überwachen von Signalen des Fahrzeug-Bussystems umfasst vorzugsweise ein Empfangen von einem auf dem Fahrzeug-Bussystem bereitgestellten Signal. Ferner umfasst das Überwachen vorzugsweise ein Identifizieren von den auf dem Fahrzeug-Bussystem bereitgestellten Signalen. So kann beispielsweise ermittelt werden, ob das auf dem Fahrzeug-Bussystem bereitgestellte Signal ein Notbremssignal oder ein anderes Signal, wie beispielsweise ein Airbag-Signal, ist. Besonders bevorzugt umfasst das Überwachen von Signalen auf dem Fahrzeug-Bussystem ein Ermitteln einer Prüfsumme und/oder eines Zählers, die das auf dem Fahrzeug-Bussystem bereitgestellte Signal identifizieren. Vorzugsweise umfasst das Detektieren eines Notbremssignals, das von einem Fahrerassistenzsystem auf dem Fahrzeug-Bussystem bereitgestellt wird, dann ein Vergleichen der ermittelten Prüfsumme und/oder des ermittelten Zählers mit einer vordefinierten Sicherheitsprüfsumme und/oder einem vordefinierten Sicherheitszähler, wobei das Notbremssignal detektiert wird, wenn die ermittelte Prüfsumme des Signals mit der vordefinierten Sicherheitsprüfsumme übereinstimmt und/oder wenn der ermittelte Zähler des Signals mit dem Sicherheitszähler übereinstimmt. Vorzugsweise wird das Überwachen von Signalen auf dem Fahrzeug-Bussystem und das Detektieren eines Notbremssignals von einer Bremssteuereinheit des Bremssystems durchgeführt. Es kann jedoch auch vorgesehen sein, dass das Überwachen von Signalen auf dem Fahrzeug-Bussystem und das Detektieren eines Notbremssignals alternativ oder redundant von einer Handbremssteuereinheit, besonders bevorzugt einer Handbremssteuereinheit einer elektro-pneumatischen Handbremse, durchgeführt wird. Vorzugsweise können die Handbremssteuereinheit und die Bremssteuereinheit auch zum Überwachen und/oder Detektieren zusammenwirken. Eine möglicherweise negative Wechselwirkung mit einem Notbremsen des Fahrzeugs kann dadurch vermieden werden, dass die Bremseinrichtung des Bremssystems erst dann in die Bremsstellung verbracht wird, wenn ein Stillstand des Fahrzeugs ermittelt wird.

In einer ersten bevorzugten Ausführungsform umfasst das Verfahren für den Fall, dass ein Stillstand des Fahrzeugs nicht ermittelt wird: Ermitteln, ob eine manuelle Nutzervorgabe bereitgestellt wird; Verbringen der Bremseinrichtung des Bremssystems in die Bremsstellung, wenn das Bereitstellen der manuellen Nutzervorgabe nicht ermittelt wird. Der Fall, dass ein Stillstand des Fahrzeugs nicht ermittelt wird, kann mehrere mögliche Ursachen haben. Beispielsweise kann eine Notbremssituation, aufgrund derer das Notbremssignal bereitgestellt wird, kein vollständiges Abbremsen des Fahrzeugs bedingen. Dies ist beispielsweise der Fall, wenn ein vorausfahrendes Fahrzeug nur kurzzeitig verzögert und danach eine Fahrt fortsetzt, sodass auch das hinterherfahrende Fahrzeug nicht vollständig gebremst werden muss. Wird im Anschluss an das Bereitstellen eines Notbremssignals die Fahrt fortgesetzt, so wird eine Nutzervorgabe auf dem Fahrzeug-Bussystem bereitgestellt, die beispielsweise ein Fahrsignal sein kann, das durch Betätigen eines Fahrpedals des Fahrzeugs auf dem Fahrzeug-Bussystem bereitgestellt wird. Bleibt ein Fahrsignal aus, deutet dies auf eine Notfallsituation hin, sodass ein Verbringen der Bremseinrichtung in die Bremsstellung auch dann sinnvoll sein kann, wenn kein Stillstand des Fahrzeugs ermittelt wird. Vorzugsweise erfolgt das Verbringen der Bremseinrichtung des Bremssystems in die Bremsstellung, wenn das Bereitstellen der manuellen Nutzervorgabe für einen vordefinierten Zeitraum ausbleibt. Vorzugsweise wird der Zeitraum ausgehend von einem Ermitteln des Notbremssignals gemessen.

**In** einer bevorzugten Weiterbildung umfasst der Schritt Ermitteln, ob sich das Fahrzeug in einem Stillstand befindet: Erfassen eines Raddrehzahlsignals, das von einem Raddrehzahlsensor und/oder einem Zentralmodul auf dem Fahrzeug-Bussystem bereitgestellt wird; Auswerten des Raddrehzahlsignals; und Ermitteln des Stillstands des Fahrzeugs, wenn ein Betrag der Drehzahl einen vordefinierten Drehzahlgrenzwert unterschreitet, vorzugsweise für einen vordefinierten Zeitraum unterschreitet. Vorzugsweise kann der Schritt Ermitteln, ob sich das Fahrzeug in einem Stillstand befindet aufweisen: Erfassen eines Beschleunigungssignals, das von einem Beschleunigungssensor auf dem Fahrzeug-Bussystem bereitgestellt wird; Auswerten des Beschleunigungssignals; und Ermitteln des Stillstands des Fahrzeugs, wenn ein Beschleunigungswert einen Stillstand des Fahrzeugs repräsentiert, vorzugsweise für einen vorbestimmten Zeitraum. Beispielsweise kann das Ausbleiben eines positiven und/oder negativen Beschleunigungswertes einen Stillstand des Fahrzeugs repräsentieren.

Vorzugsweise erfolgt das Auswerten des Raddrehzahlsignals mit einem Modul, das auch das Fahrzeug-Bussystem überwacht. Es kann jedoch auch vorgesehen sein, dass der Raddrehzahlsensor das Raddrehzahlsignal auswertet und ermittelt, ob sich das Fahrzeug in einem Stillstand befindet. Gegebenenfalls ist der Raddrehzahlsensor dann dazu ausgebildet, ein Stillstandsignal auf dem Fahrzeug-Bussystem bereitzustellen. Vorzugsweise weist das Verfahren für den Fall, dass ein Raddrehzahlsignal nicht bereitgestellt wird, auf: Verbringen der Bremseinrichtung des Bremssystems in die Bremsstellung, wenn ein Zeitraum seit einem letztmaligen Bereitstellen eines Raddrehzahlsignals einen vordefinierten Drehzahl-Zeitgrenzwert überschreitet. Bevorzugt kann das Ermitteln des Stillstands des Fahrzeugs erfolgen, wenn der Betrag der Drehzahl den vordefinierten Drehzahlgrenzwert unterschreitet, vorzugsweise für einen vordefinierten Zeitraum unterschreitet, und ein in einem vordefinierten Zeitraum vor dem Erfassen des Raddrehzahlsignals ermittelter Beschleunigungswert einen vordefinierten Beschleunigungsgrenzwert überschreitet. So ist es beispielsweise typisch für Unfälle von Fahrzeugen, dass ein Stillstand der Räder auf eine starke Verzögerung des Fahrzeugs folgt. Vorzugsweise kann das Ermitteln, ob sich das Fahrzeug in einem Stillstand befindet, alternativ oder ergänzend auch mittels Erfassen eines Tachosignals, Auswerten des Tachosignals und Ermitteln eines Stillstands des Fahrzeugs, wenn das Tachosignal einen vordefinierten Tachogrenzwert unterschreitet, erfolgen.

Erfindungsgemäß weist das Verfahren ferner auf: Ermitteln eines Ausbleibens des Notbremssignals, und Ermitteln, ob das Ausbleiben des Notbremssignals in Antwort auf ein Notbremsabschlusssignal erfolgt, das von dem Fahrerassistenzsystem zum Beenden einer Notbremsung des Fahrzeugs bereitgestellt wird.

Es soll verstanden werden, dass das Notbremsabschlusssignal kein gesondertes Signal sein muss. Ebenso kann das Notbremsabschlusssignal ein Teil des Notbremssignals sein. Vorzugsweise weist das Notbremssignal ein Notbremsabschlusssignal auf, wobei das Notbremsabschlusssignal ein korrektes Ende des Notbremssignals identifiziert. Bevorzugt ist das Notbremsabschlusssignal ein vordefiniertes Abschlussbit und/oder eine vordefinierte Abschlussbitfolge des Notbremssignals. Beispielsweise kann das Notbremsabschlusssignal eine Abschlussbitfolge aus sieben aufeinanderfolgenden rezessiven Bits sein. Das Notbremsabschlusssignal kennzeichnet dabei das Notbremssignal derart, dass eine Notbremsung beendet werden soll. Dies kann beispielsweise der Fall sein, wenn keine Notbremsung mehr erforderlich ist, oder wenn das Fahrzeug sich im Stillstand befindet. Wenn keine Notbremsung mehr vorliegt und das Notbremsabschlusssignal ausbleibt, dann deutet dies auf eine Beschädigung des Fahrerassistenzsystems hin. So kann beispielsweise das Fahrerassistenzsystem beschädigt oder zerstört sein, wobei dieses dann auch kein Notbremssignal mehr auf dem Fahrzeug-Bussystem bereitstellt. Insbesondere da Fahrerassistenzsysteme häufig an einer Fahrzeugfront angeordnet sind, werden diese oft zerstört, wenn das Fahrzeug mit einem Hindernis kollidiert. Auch nach einem Zerstören des Fahrerassistenzsystems kann jedoch ein Bremsen des Fahrzeugs notwendig sein, wobei hierfür vorzugsweise ermittelt wird, ob das Ausbleiben des Notbremssignals in Antwort auf ein Notbremsabschlusssignal erfolgt.

Vorzugsweise weist das Verfahren ferner auf: Ermitteln einer Zeitspanne zwischen dem Detektieren des Notbremssignals und dem Ermitteln des Ausbleibens des Notbremssignals, für den Fall, dass das Ausbleiben des Notbremssignals nicht in Antwort auf ein Notbremsabschlusssignal erfolgt, Vergleichen der Zeitspanne mit einem vordefinierten Zeitgrenzwert; und Durchführen zumindest einer Folgeoperation, falls die Zeitspanne den vordefinierten Zeitgrenzwert übersteigt. Ist ein Fahrzeug in einen Unfall verwickelt, vergeht zwischen einem ersten Detektieren des Notbremssignals und einem Ausbleiben des Notbremssignals, das durch die tatsächliche Kollision hervorgerufen wird, ein bestimmtes Mindest-Zeitintervall, das durch den Zeitgrenzwert repräsentiert wird. Ist die Zeitspanne, welche zwischen dem Detektieren des Notbremssignals und dem Ausbleiben des Notbremssignals verstreicht, kleiner als dieser Zeitgrenzwert, ist das Ausbleiben des Notbremssignals mit großer Wahrscheinlichkeit nicht auf einen Unfall des Fahrzeugs zurückzuführen. Ein frühzeitiges oder unnötiges Durchführen der Folgeoperation kann daher mittels des Vergleichens der Zeitspanne mit dem Zeitgrenzwert vermieden werden. Beispielsweise kann ein weiteres Fahrerassistenzsystem dazu ausgebildet sein, das Fahrzeug während eines Unfalls bis zum Stillstand zu Bremsen, auch dann, wenn das Notbremssystem beschädigt ist. Eine Folgeoperation soll bevorzugt erst dann durchgeführt werden, wenn dieses sogenannte "In-Crash"-Bremsen abgeschlossen ist, wofür in der Regel ein vorbekanntes Mindestzeitintervall benötigt wird, das dann den Zeitgrenzwert definiert. Es kann ferner auch vorgesehen sein, dass der Zeitgrenzwert unter Verwendung weiterer Parameter definiert wird.

In einer bevorzugten Weiterbildung umfasst die Folgeoperation: Verbringen der Bremseinrichtung des Bremssystems in die Bremsstellung zum Bremsen des Fahrzeugs bis zum Stillstand, wenn ein Stillstand des Fahrzeugs nicht ermittelt wird, und Halten der Bremseinrichtung in der Bremsstellung, im Anschluss an das Bremsen des Fahrzeugs bis zum Stillstand. Wenn das Fahrerassistenzsystem bei einem Unfall beschädigt oder zerstört wird, dann wird kein Notbremssignal mehr auf dem Fahrzeug-Bussystem bereitgestellt. Das Fahrzeug kann dabei noch immer in Bewegung sein, sodass zum Verhindern weiterer Kollisionen ein Bremsen des Fahrzeugs weiterhin erwünscht sein kann. Die Folgeoperation beinhaltet daher vorzugsweise das Bremsen des Fahrzeugs bis zum Stillstand. Hierdurch kann in bevorzugter Weise eine Redundanz des Fahrerassistenzsystems erreicht werden. Ein Bremsen des Fahrzeugs ist also auch dann möglich, wenn das Fahrerassistenzsystem zerstört ist und kein Notbremssignal mehr bereitstellt. Ferner wird im Anschluss an das Bremsen bis zum Stillstand das Fahrzeug weiterhin gebremst, sodass ein Sichern des Fahrzeugs und/oder eine Bergung verunfallter Personen erleichtert wird.

Vorzugsweise umfasst die Folgeoperation: Verbringen der Bremseinrichtung des Bremssystems in die Bremsstellung, wenn das Ermitteln des Stillstands des Fahrzeugs unmöglich ist. Beispielsweise kann das Ermitteln des Stillstands des Fahrzeugs unmöglich sein, wenn der Raddrehzahlsensor bzw. die Raddrehzahlsensoren beschädigt sind und/oder wenn das Fahrzeug-Bussystem unterbrochen ist. Auch in solchen Fällen soll das Bremsen des Fahrzeugs bevorzugt möglich sein.

Gemäß einer bevorzugten Ausführungsform weist das Verfahren ferner auf: Erfassen eines Fahrsignals im Anschluss an das Verbringen der Bremseinrichtung des Bremssystems in die Bremsstellung; und Verbringen der Bremseinrichtung des Bremssystems in eine Fahrstellung in Antwort auf das Erfassen des Fahrsignals. Vielfach kann es im Rahmen einer Bergung verunfallter Personen notwendig sein, verunfallte Fahrzeuge zu bewegen. Wenn beispielsweise ein Fahrer eines Nutzfahrzeugs in einem Fahrerhaus eingeklemmt ist, kann es notwendig sein, zwei miteinander verkeilte Fahrzeuge zu trennen, um eine Bergung des Fahrers zu ermöglichen. Um die in die Bremsstellung verbrachte Bremseinrichtung des Bremssystems zu lösen und ein Bewegen des Fahrzeugs zu ermöglichen, ist vorzugsweise das Verbringen der Bremseinrichtung des Bremssystems in eine Fahrstellung vorgesehen. Dies erfolgt erfindungsgemäß durch Erfassen des Fahrsignals, wobei das Fahrsignal vorzugsweise von einem Fahrpedal des Fahrzeugs bereitgestellt wird. Ferner kann die Bremseinrichtung des Bremssystems auch in die Bremsstellung verbracht worden sein, ohne dass das Fahrzeug in einen Unfall verwickelt war. Beispielsweise kann ein Unfall durch das Notbremsen des Fahrzeugs verhindert worden sein. Wenn eine Fahrt des Fahrzeugs fortgesetzt werden soll, kann ein Fahrer des Fahrzeugs das Fahrsignal bereitstellen, wobei die Bremseinrichtung in die Fahrstellung verbracht wird und das Fahrzeug erneut bewegt werden kann. Vorzugsweise kann das Fahrsignal auch mittels einer außen am Fahrzeug angebrachten Löseeinrichtung und/oder von einer zentralen Steuereinheit des Fahrzeugs bereitgestellt werden.

Vorzugsweise ist das Fahrzeug-Bussystem ein CAN-Bussystem. CAN-Bussysteme haben eine große Verbreitung für alle gängigen Fahrzeugtypen, sodass das Verfahren vorzugsweise für besonders viele Fahrzeuge angewendet werden kann. Ferner bevorzugt, kann das Fahrzeug-Bussystem auch ein CAN FD-Bussystem, ein LIN-Bussystem, ein SAE J1939-Bussystem, ein FlexRay-Bussystem, ein MOST-Bussystem oder ein K-Line-Bussystem sein.

In einer bevorzugten Ausführungsform des Verfahrens ist das Fahrerassistenzsystem ein autonomes Notbremssystem des Fahrzeugs. Solche autonomen Notbremssysteme weisen vorzugsweise zumindest eine Radareinheit auf, die zum Erfassen eines in Fahrtrichtung vor dem Fahrzeug liegenden Fahrtwegs ausgebildet sind. Bei einem Unfall des Fahrzeugs wird häufig eine solche Radareinheit beschädigt, sodass das Verfahren eine besonders gute Redundanz ermöglicht, wenn das Fahrerassistenzsystem ein autonomes Notbremssystem des Fahrzeugs ist.

Bevorzugt ist die Bremseinrichtung eine Feststellbremse oder eine Betriebsbremse des Bremssystems. Besonders vorteilhaft ist, dass eine Feststellbremse in der Regel dazu ausgebildet ist, das Fahrzeug dauerhaft zu bremsen, beispielsweise auch dann, wenn kein Bremssignal bereitgestellt wird. So weisen Nutzfahrzeuge häufig sogenannte Federspeicherbremsen auf, wobei eine vorgespannte Feder das Fahrzeug auch dann bremst, wenn kein hydraulischer oder pneumatischer Bremsdruck und/oder kein Bremssignal bereitgestellt wird.

Es kann jedoch auch vorgesehen sein, dass die Bremseinrichtung eine elektronische Handbremse und/oder eine Magnetbremse ist.

Gemäß einem zweiten Aspekt löst die Erfindung die eingangs genannte Aufgabe mit einer Steuereinheit für ein Fahrzeug, die Mittel aufweist, die geeignet sind, die Schritte eines Verfahrens gemäß dem ersten Aspekt der Erfindung auszuführen. Vorzugsweise ist die Steuereinheit eine Hauptsteuereinheit eines Bremssystems des Fahrzeugs. Es kann jedoch auch vorgesehen sein, dass die Steuereinheit eine gesonderte Steuereinheit ist, die nur dazu vorgesehen ist, das Verfahren gemäß dem ersten Aspekt Erfindung auszuführen. Dies ist insbesondere dann wünschenswert, wenn eine besonders hohe Redundanz erreicht werden soll.

Gemäß einem dritten Aspekt löst die Erfindung die eingangs genannte Aufgabe mit einem Computerprogramm, umfassend Befehle, die bewirken, dass die Steuereinheit gemäß dem zweiten Aspekt der Erfindung das Verfahren gemäß dem ersten Aspekt der Erfindung ausführt, wenn das Computerprogramm auf einer Recheneinheit ausgeführt wird. Die Recheneinheit ist vorzugsweise eine Recheneinheit der Steuereinheit gemäß dem zweiten Aspekt der Erfindung.

**In** einem vierten Aspekt löst die Erfindung die eingangs genannte Aufgabe mit einem Bremssystem für ein Fahrzeug, insbesondere Nutzfahrzeug, aufweisend eine Steuereinheit gemäß dem zweiten Aspekt der Erfindung. Vorzugsweise weist das Bremssystem einen Anhängerbremskreis für einen Anhänger des Fahrzeugs auf, wobei die Bremseinrichtung besonders bevorzugt eine Bremseinrichtung des Anhängerbremskreises umfasst.

**In** einem fünften Aspekt wird die eingangs genannte Aufgabe gelöst mit einem Fahrzeug, vorzugsweise Nutzfahrzeug, aufweisend ein Bremssystem gemäß dem vierten Aspekt der Erfindung.

Es soll verstanden werden, dass das Verfahren gemäß dem ersten Aspekt der Erfindung, die Steuereinheit nach dem zweiten Aspekt der Erfindung, das Computerprogramm gemäß dem dritten Aspekt der Erfindung, das Bremssystem gemäß dem vierten Aspekt der Erfindung und das Fahrzeug gemäß dem fünften Aspekt der Erfindung gleiche und ähnliche Unteraspekte aufweisen, wie sie insbesondere in den abhängigen Ansprüchen niedergelegt sind. Insofern wird für weitere Ausgestaltungen der Steuereinheit, des Computerprogramms, des Bremssystems sowie des Fahrzeugs und deren Vorteile vollumfänglich auf die obige Beschreibung zum ersten Aspekt der Erfindung verwiesen. Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen.

Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen. Diese zeigen in:
- Figur 1: ein Fahrzeug gemäß einem ersten Ausführungsbeispiel mit einem Bremssystem und einem Fahrerassistenzsystem;
- Figur 2: eine schematische Darstellung, welche die Schritte eines ersten Ausführungsbeispiels des erfindungsgemäßen Verfahrens repräsentiert;
- Figur 3: eine schematische Darstellung, welche ein Ermitteln, ob sich ein Fahrzeug im Stillstand befindet weiter illustriert; und in
- Figur 4: eine schematische Darstellung, welche die Schritte eines zweiten Ausführungsbeispiels des erfindungsgemäßen Verfahrens repräsentiert.

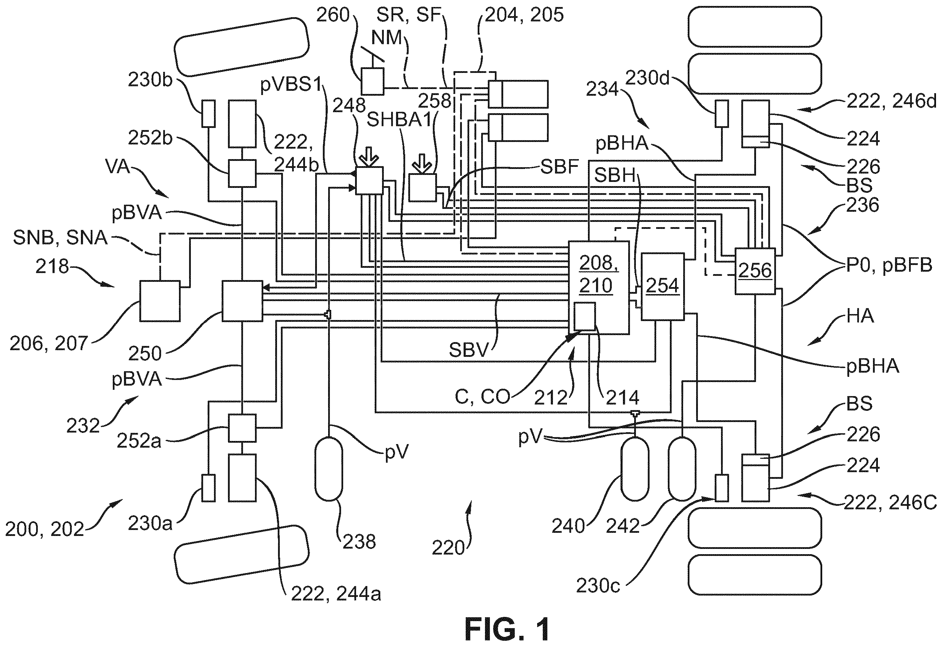

Figur 1 zeigt ein Fahrzeug 200, das hier ein Nutzfahrzeug 202 ist. Das Fahrzeug 200 weist ein Bremssystem 220 auf, das einen Vorderachsbremskreis 232 für eine Vorderachse VA sowie einen Hinterachsbremskreis 234 für eine Hinterachse HA des Fahrzeugs 200 aufweist. Für die Hinterachse HA ist ferner ein Feststellbremskreis 236 vorgesehen. Der Vorderachsbremskreis 232 wird aus einem ersten Druckluftvorrat 238 gespeist, der Hinterachsbremskreis 234 aus einem zweiten Druckluftvorrat 240 und der Parkbremskreis 236 wird aus einem dritten Druckluftvorrat 242 gespeist. Sowohl der erste Druckluftvorrat 238 als auch der zweite Druckluftvorrat 240 und der dritte Druckluftvorrat 242 stellen einen Vorratsdruck pV bereit. Es kann alternativ auch vorgesehen sein, dass der Parkbremskreis 236 ebenfalls durch den ersten Druckluftvorrat 238 und/oder den zweiten Druckluftvorrat 240 versorgt wird. Das Bremssystem 220 weist mehrere Bremseinrichtungen 222 auf. Hier umfassen die Bremseinrichtungen 222 erste und zweite Vorderachsbremsaktuatoren 244a, 244b an der Vorderachse VA und zwei Hinterachsbremsaktuatoren 246c, 246d an der Hinterachse HA. Die Hinterachsbremsaktuatoren 246c, 246d sind als sogenannte Tristop-Bremszylinder ausgebildet und können sowohl als Betriebsbremsen 226 als auch als Feststellbremsen 224 agieren, indem sie einen Federspeicherbremszylinder aufweisen.

Das Bremssystem 220 weist einen Bremswertgeber 248 auf, der sowohl mit dem ersten Druckluftvorrat 238 als auch mit dem zweiten Druckluftvorrat 240 verbunden ist. Der Bremswertgeber 248 ist als sogenannter 1P2E-Bremswertgeber ausgebildet und weist neben einem pneumatischen Ausgang auch zwei elektrische Ausgänge auf. Beim Betätigen stellt der Bremswertgeber 248 an dem pneumatischen Ausgang einen ersten Vorderachs-Bremssteuerdruck pVBS1 und an einem ersten elektrischen Anschluss ein erstes Hinterachsbremsanforderungssignal SHBA1 bereit. Der erste Vorderachs-Bremssteuerdruck pVBS1 wird dann an einem Vorderachsmodulator 250 bereitgestellt, der dann den ersten Vorderachs-Bremssteuerdruck pVBS1 volumenverstärkt und basierend hierauf einen Vorderachsbremsdruck pBVA für die ersten und zweiten Vorderachsbremsaktuatoren 244a, 244b aussteuert. Um eine radgerechte Bremsung zu erreichen, sind zwischen dem Vorderachsmodulator 250 und den ersten bzw. zweiten Vorderachsbremsaktuatoren 244a, 244b erste und zweite Vorderachs-ABS-Ventile 252a, 252b vorgesehen, die elektrisch mit einem Zentralmodul 208 verbunden sind, um so von diesem geschaltet zu werden. Das Zentralmodul 208 ist darüber hinaus in bekannter Weise mit Raddrehzahlsensoren 230a, 230b, 230c, 230d verbunden.

Der Hinterachsbremskreis 234 wird hier elektrisch mittels des Zentralmoduls 208 gesteuert, welches das von dem Bremswertgeber 248 bereitgestellte Hinterachsbremsanforderungssignal SHBA1 empfängt und ein entsprechendes Hinterachsbremssignal SBH an einem Hinterachsmodulator 254 bereitstellt. Der Hinterachsmodulator 254 steuert dann basierend auf dem Hinterachsbremssignal SBH einen entsprechenden Hinterachsbremsdruck pBHA an den jeweiligen Betriebsbremsen 226 der Hinterachsbremsaktuatoren 246c, 246d aus. Ferner kann das Zentralmodul 208 auch ein Vorderachsbremssignal SBV an dem Vorderachsmodulator 250 bereitstellen, wobei der Vorderachsmodulator 250 dazu ausgebildet ist, einen dem Vorderachsbremssignal SBV entsprechenden Vorderachsbremsdruck pBVA auszusteuern.

Ein Feststellbremsmodul 256 des Feststellbremskreises 236 ist sowohl mit dem Bremswertgeber 248 als auch mit einem Feststellbremswertgeber 258 verbunden. Ferner ist das Feststellbremsmodul 256 auch mit dem Zentralmodul 208 verbunden. Wenn eines der mit dem Feststellbremsmodul 256 verbundenen Elemente, wie hier beispielhaft der Feststellbremswertgeber 258, ein entsprechendes Feststellbremssignal SBF bereitstellt, steuert das Feststellbremsmodul 256 einen Feststellbremsdruck pBFB aus. Zudem ist das Feststellbremsmodul 256 dazu ausgebildet, Federspeicher der Feststellbremsen 224 zu entlüften und die Feststellbremsen 224 somit in eine Bremsstellung BS zu versetzen. Zum Entlüften verbindet das Feststellbremsmodul 256 die Federspeicher der Feststellbremsen 224 mit einer Drucksenke, vorzugsweise der Umgebung, und stellt damit einen Entlüftungsdruck p0 bereit.

Weiterhin ist das Fahrzeug 200 mit einem Fahrerassistenzsystem 206 ausgestattet. Das Fahrerassistenzsystem 206 ist hier ein an einer Fahrzeugfront 218 angeordnetes Notbremssystem 207. Zum Erfassen eines vor der Fahrzeugfront 218 liegenden Fahrbereichs des Fahrzeugs 200 weist das Notbremssystem 207 ein nicht weiter dargestelltes Radarsystem auf. Das Notbremssystem 207 ist dazu ausgebildet, zu ermitteln, ob eine Notbremssituation NB vorliegt, in der das Fahrzeug 200 verzögert werden muss, und gegebenenfalls ein Notbremssignal SNB bereitzustellen. Ermittelt beispielsweise das Notbremssystem 207 ein vor dem Fahrzeug 200 auftauchendes Hindernis (nicht dargestellt) und ein Ausweichen des Fahrzeugs 200 ist nicht mehr möglich, wird dies durch das Notbremssystem 207 ermittelt, wobei dieses dann das Notbremssignal SNB bereitstellt.

Das Fahrerassistenzsystem 206 ist mittels eines Fahrzeugs-Bussystems 204, das hier ein CAN-Bussystem 205 ist, mit dem Zentralmodul 208 und dem Feststellbremsmodul 256 verbunden. Das Fahrzeug-Bussystem 204 ist ein System zum Übertragen von Daten und/oder Signalen zwischen mehreren mit dem Fahrzeug-Bussystem 204 verbundenen Einheiten, wobei ein gemeinsamer Übertragungsweg genutzt wird. Das von dem Notbremssystem 207 bereitgestellte Notbremssignal SNB kann hier also von dem Zentralmodul 208 und dem Feststellbremsmodul 256 erfasst werden. Weiterhin besteht auch zwischen dem Feststellbremsmodul 256 und dem Zentralmodul 208 eine Verbindung des Fahrzeug-Bussystems 204. Es soll verstanden werden, dass auch weitere Einheiten des Fahrzeugs 200 und insbesondere des Bremssystems 220 mit dem Fahrzeug-Bussystem 204 verbunden sein können. Beispielsweise könnte ein nicht gezeigter Lenkwinkelsensor oder eine elektronische Lenkung mit dem Fahrzeug-Bussystem 204 verbunden sein. In diesem Ausführungsbeispiel erfolgt zudem ein Bereitstellen eines Raddrehzahlsignals SR auf dem Fahrzeug-Bussystem 204 mittels des Zentralmoduls 208.

Stellt nun das Fahrerassistenzsystem 206 ein Notbremssignal SNB auf dem Fahrzeug-Bussystem 204 bereit, wird dies durch das Zentralmodul 208 erkannt. Daraufhin stellt das Zentralmodul 208 das Vorderachsbremssignal SBV an dem Vorderachsmodulator 250 und das Hinterachsbremssignal SBH an dem Hinterachsmodulator 254 bereit. In Antwort darauf werden von den Modulatoren 250, 254 die Bremsdrücke pBVA, pBHA ausgesteuert und das Fahrzeug 200 wird gebremst. Wird keine Notbremsung des Fahrzeugs 200 mehr benötigt, etwa dann, wenn das Fahrzeug 200 sich in einem Stillstand H befindet oder kein Hindernis mehr vorliegt, stellt das Fahrerassistenzsystem 206 ein Notbremsabschlusssignal SNA auf dem Fahrzeug-Bussystem 204 bereit. Ein Bremsen des Fahrzeugs 200 wird daraufhin beendet. Fahrerassistenzsysteme 206, die zum Durchführen solcher Notbremsungen BN ausgebildet sind, sind hinlänglich bekannt. Kritisch ist hierbei allerdings, dass ein Bremsen des Fahrzeugs 200 nur bis zum Stillstand H erfolgt und die Bremseinrichtungen 222 daraufhin gelöst werden. Ferner ist das Fahrerassistenzsystem 206 an der exponierten Fahrzeugfront 218 angeordnet, wodurch es bei Unfällen des Fahrzeugs 200 beschädigt und/oder zerstört werden kann. Wird das Notbremssystem 207 bei einem Unfall zerstört, wird auch das Notbremssignal SNB nicht weiter bereitgestellt und eine Notbremsung BN des Fahrzeugs 200 ist nicht mehr möglich.

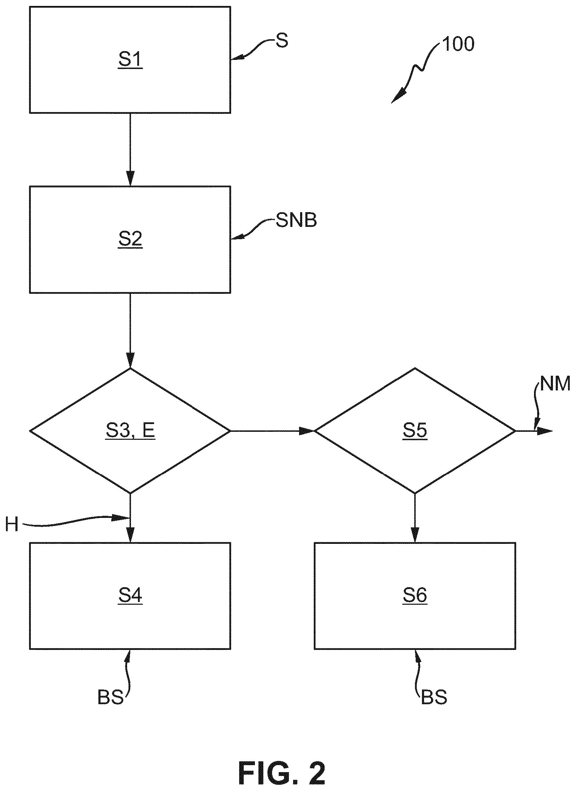

Figur 2 illustriert nun die Schritte eines ersten Ausführungsbeispiels eines erfindungsgemäßen Verfahrens 100 zum Sichern eines Fahrzeugs 200. In einem ersten Schritt S1 werden Signale S auf dem Fahrzeug-Bussystem 204 überwacht. Dieses Überwachen von Signalen S wird hier von der Zentralmodul 208 durchgeführt, das hier eine erfindungsgemäße Steuereinheit 210 ist oder beinhaltet. Es kann jedoch ebenso vorgesehen sein, dass das Überwachen von Signalen S von einer gesonderten Steuereinheit 210 und/oder einem der Modulatoren 250, 256 durchgeführt wird. Das Zentralmodul weist eine Recheneinheit 214 auf, die dazu ausgebildet ist, Befehle CO eines Computerprogramms C auszuführen. Wird das Computerprogramm C auf der Recheneinheit 214 ausgeführt, führen Mittel 212 der Steuereinheit 210 vorzugsweise die Schritte des erfindungsgemäßen Verfahrens 100 aus.

Liegt eine Notbremssituation NB vor, so stellt das Fahrerassistenzsystem 206 das Notbremssignal SNB auf dem Fahrzeug-Bussystem 204 bereit. Das Notbremssignal SNB kann dann in einem zweiten Schritt S2 auf dem Fahrzeug-Bussystem 204 detektiert werden. In Antwort auf das Detektieren des Notbremssignals SNB ermittelt die Steuereinheit 210 in einem dritten Schritt S3, ob sich das Fahrzeug 200 in einem Stillstand H befindet. Das Ermitteln E eines Stillstands H des Fahrzeugs 200 wird an späterer Stelle ausführlich erläutert. Wenn ermittelt wird, dass sich das Fahrzeug 200 in einem Stillstand H befindet, dann wird in einem anschließenden vierten Schritt S4 eine Bremseinrichtung 222 des Bremssystems 200 in eine Bremsstellung BS verbracht. In diesem Ausführungsbeispiel wird dafür von dem Zentralmodul 208 ein Entlüftungssignal S0 an dem Hinterachsmodulator 256 bereitgestellt. Dieser entlüftet daraufhin die Federspeicher auf den Umgebungsdruck p0, wodurch die Feststellbremse 224 in die Bremsstellung BS verbracht wird. Da Federspeicherbremsen in einem drucklosen Zustand in die Bremsstellung BS eingelegt sind, kann eine besonders hohe Ausfallsicherheit erreicht werden.

Wenn das Ermitteln E ergibt, dass kein Stillstand H des Fahrzeugs vorliegt, wird in einem fünften Schritt S5 ermittelt, ob eine manuelle Nutzervorgabe NM bereitgestellt wird. Eine solche manuelle Nutzervorgabe NM kann beispielsweise von einem Fahrpedal 260 auf dem Fahrzeug-Bussystem 204 oder mittels einer anderen Leitung (nicht dargestellt) bereitgestellt werden. Ferner könnte die manuelle Nutzervorgabe NM auch mittels des Bremswertgebers 248 bereitgestellt werden. Wenn von einem Fahrer des Fahrzeugs 200 eine manuelle Nutzervorgabe NM bereitgestellt wird, kann daraus geschlossen werden, dass der Fahrer unverletzt ist und die Notbremssituation NB bewältigt wurde. Ein Verbringen der Bremseinrichtung 222 des Bremssystems 200 in die Bremsstellung BS ist dann nicht notwendig und eine Fahrt des Fahrzeugs 200 kann fortgesetzt werden.

Wenn hingegen nach dem Ermitteln E eines Notbremssignals SNB und bei nicht vorliegendem Stillstand H des Fahrzeugs 200 keine manuelle Nutzervorgabe NM ermittelt wird, dann ist dies ein starkes Indiz für ein Bestehen einer Notbremssituation NB. Daher kann in einem sechsten Schritt S6 die Bremseinrichtung 222 auch dann in die Bremsstellung BS verbracht werden, wenn kein Stillstand H des Fahrzeugs 200 ermittelt wird.

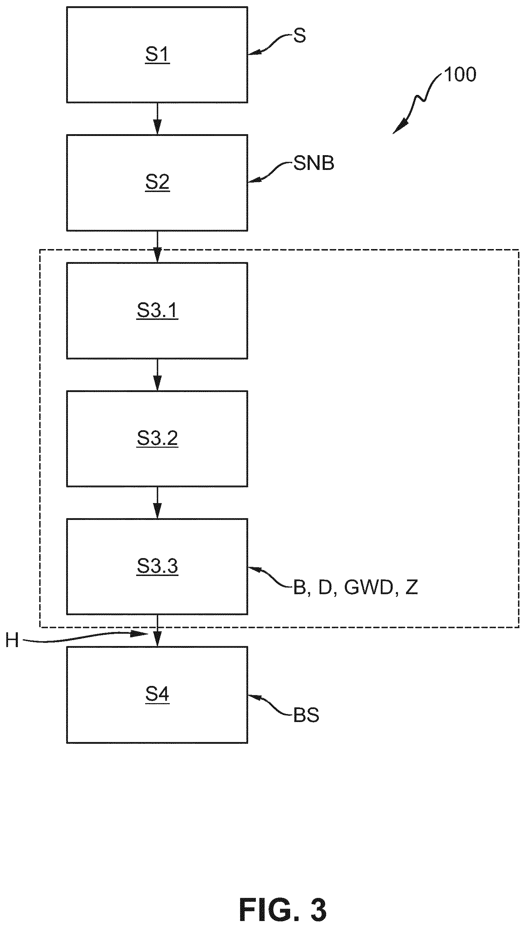

Figur 3 illustriert das Ermitteln E, ob sich das Fahrzeug 200 in einem Stillstand H befindet, weiter. Nach dem Überwachen von Signalen S auf dem Fahrzeug-Bussystems 204 (Schritt S1) und dem Detektieren des Notbremssignals SNB (Schritt S2) wird in einem ersten Teilschritt S3.1 das Raddrehzahlsignals SR erfasst. Hier stellen die Raddrehzahlsensoren 230 Signalwerte an dem Zentralmodul 208 bereit, welches dann wiederum das Raddrehzahlsignal SR bereitstellt. Ebenso könnte das Raddrehzahlsignal SR aber auch von einer gesonderten Steuereinheit 210 und/oder von den Raddrehzahlsensoren 230 bereitgestellt werden.

In einem zweiten Teilschritt S3.2 des Ermittelns E wird das Raddrehzahlsignal SR ausgewertet. Beim Auswerten wird ein Betrag B der Drehzahl D ermittelt. Dabei kann ein Betrag B der Drehzahl auch über einen Zeitraum betrachtet werden. Anschließend wird der ermittelte Betrag B der Drehzahl D in einem dritten Teilschritt S3.3 mit einem vordefinierten Drehzahlgrenzwert GWD verglichen. Es ist insbesondere deshalb sinnvoll, den Betrag B der Drehzahl D zu betrachten, da sich das Fahrzeug 200 auch in einer Rückwärtsfahrt mit negativem Wert der Drehzahl D befinden kann. Vorzugsweise wird beim Auswerten aus dem Raddrehzahlsignal SR eine Geschwindigkeit des Fahrzeugs 200 ermittelt. Dabei kann das Raddrehzahlsignal SR aber auch bereits eine entsprechende Geschwindigkeitsinformation umfassen.

Wenn der Betrag B der Drehzahl D den vordefinierten Drehzahlgrenzwert GWD unterschreitet, dann wird ein Stillstand H des Fahrzeugs 200 ermittelt. Vorzugsweise weist der Drehzahlgrenzwert GWD einen Wert von null auf. Es kann jedoch auch vorgesehen sein, dass der Drehzahlgrenzwert größer null ist. So kann eine Bremseinrichtung 222 des Bremssystems 220 beispielsweise auch dann in die Bremsstellung BS verbracht werden, wenn sich das Fahrzeug 200 mit nur mäßiger Geschwindigkeit (z.B. <= 3 km/h) fortbewegt und somit keine oder nur geringe Gefahr für ein Schleudern des Fahrzeugs 200 aufgrund des Bremsens besteht.

Vorzugsweise wird der Stillstand H nur dann ermittelt, wenn der Drehzahlgrenzwert GWD für einen vorbestimmten Zeitraum Z unterschritten wird. Hierdurch kann vermieden werden, dass ein kurzfristiges Blockieren eines oder mehrerer Räder des Fahrzeugs 200 fälschlicherweise als Stillstand H des Fahrzeugs 200 interpretiert wird.

In Abhängigkeit des Ergebnisses des Ermittelns E werden im Anschluss die Schritte S5 oder S6 durchgeführt (in Fig. 3 ist nur der Fall eines positiven Ermittelns des Stillstands H dargestellt). Es soll verstanden werden, dass das Ermitteln E vorzugsweise auch kontinuierlich und/oder parallel zu anderen Schritten des Verfahrens 100 durchgeführt werden kann.

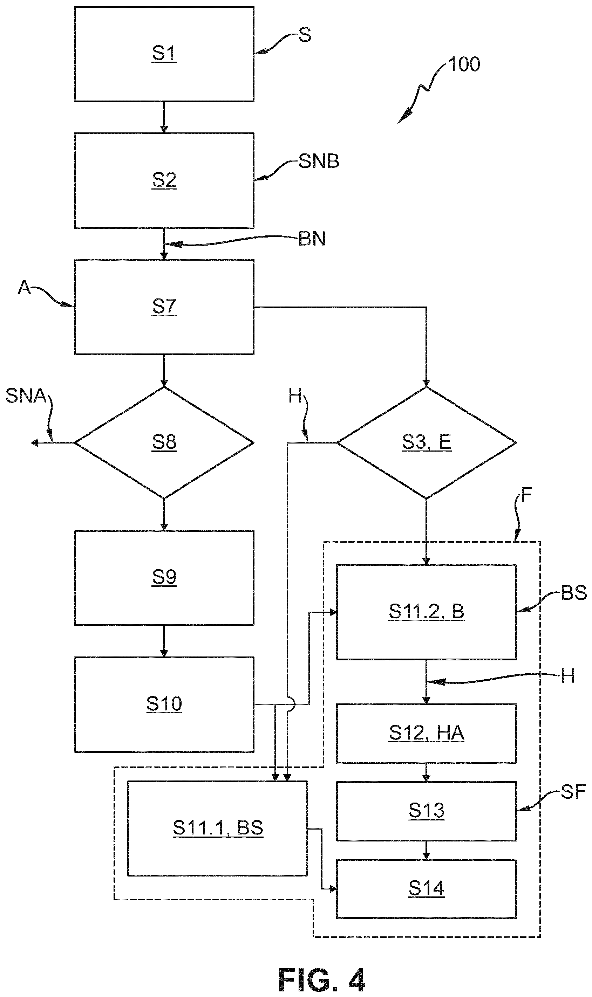

Figur 4 illustriert die Schritte des erfindungsgemäßen Verfahrens gemäß einem zweiten Ausführungsbeispiel. Zunächst werden auch gemäß dem zweiten Ausführungsbeispiel Signale S auf dem Fahrzeug-Bussystem 204 überwacht (Schritt S1). Wenn in analoger Weise zum ersten Ausführungsbeispiel (Fig. 2) eine Notbremssituation NB vorliegt und ein Notbremssignal SNB auf dem Fahrzeug-Bussystems 204 bereitgestellt wird, dann wird dieses Notbremssignal SNB in dem zweiten Schritt S2 detektiert. Aufgrund des vorliegenden Notbremssignals SNB führt das Fahrzeug 200 eine Notbremsung BN aus. In einem siebten Schritt S7 wird ein Ausbleiben A des Notbremssignals SNB ermittelt. Solch ein Ausbleiben A kann mehrere mögliche Ursachen haben. Beispielsweise kann die Notbremssituation NB bewältigt sein, sodass das Fahrerassistenzsystem 206 kein Notbremssignal SNB mehr bereitstellt. Es ist jedoch ebenso möglich, dass ein Bereitstellen des Notbremssignals SNB auf dem Fahrzeug-Bussystem 204 nicht mehr möglich ist. Dies ist beispielsweise der Fall, wenn das Fahrzeug 200 in eine Frontalkollision verwickelt wurde, bei dem das an der Fahrzeugfront 218 angeordnete Fahrerassistenzsystem 206 beschädigt wurde.

In einem achten Schritt S8 wird daher ermittelt, ob das Ausbleiben A des Notbremssignals SNB in Antwort auf ein Notbremsabschlusssignal SNA erfolgt, das von dem Fahrerassistenzsystem 206 zum Beenden der Notbremsung BN des Fahrzeugs 200 bereitgestellt wird. Soll die Notbremsung BN regulär beendet werden, so stellt das Fahrerassistenzsystem 206 das Notbremsabschlusssignal SNA bereit und eine Fahrt des Fahrzeugs 200 kann gegebenenfalls fortgesetzt werden. Das Notbremsabschlusssignal SNA kann dabei auch ein Bestandteil des Notbremssignals SNB sein.

Auch gemäß dem zweiten Ausführungsbeispiel des Verfahrens 100 wird das Ermitteln E, ob sich das Fahrzeug 200 im Stillstand H befindet, durchgeführt. Vorzugsweise wird dies, wie in Figur 4 dargestellt, im Anschluss an das Ausbleiben A des Notbremssignals SNB durchgeführt. Es kann aber auch vorgesehen sein, das Ermitteln E kontinuierlich oder in regelmäßigen Zeitintervallen durchzuführen.

Wenn Schritt S8 ergibt, dass das Ausbleiben A des Notbremssignals SNB nicht in Antwort auf ein Notbremsabschlusssignal SNA erfolgt, wird in einem neunten Schritt S9 eine Zeitspanne Δt zwischen dem Detektieren des Notbremssignals SNB und dem Ermitteln des Ausbleibens A des Notbremssignals SNB ermittelt. Vorzugsweise wird diese Zeitspanne Δt durch das Zentralmodul 208 ermittelt. In einem anschließenden zehnten Schritt S10 wird die Zeitspanne Δt mit einem vordefinierten Zeitgrenzwert GWZ verglichen. Wenn die Zeitspanne Δt kleiner ist als der Zeitgrenzwert GWZ dann erfolgen gemäß diesem Ausführungsbeispiel keine weiteren Schritte.

Wenn die Zeitspanne Δt den Zeitgrenzwert GWZ überschreitet, wird eine Folgeoperation F durchgeführt. Durch den Vergleich der Zeitspanne Δt mit dem Zeitgrenzwert GWZ kann vermieden werden, dass die Folgeoperation F durchgeführt wird, wenn das Notbremssignal SNB unbeabsichtigt bereitgestellt wurde oder wenn die Notbremssituation NB sehr schnell bewältigt wurde. Ein unbeabsichtigtes Bereitstellen des Notbremssignals SNB kann beispielsweise durch einen Wackelkontakt an dem Fahrerassistenzsystem 206 oder durch Störsignalen auf dem Fahrzeug-Bussystem 204 verursacht werden. Ferner kann der Zeitgrenzwert GWZ auch so gewählt sein, dass zunächst ein weiteres System des Fahrzeugs 200 eine Operation durchführen kann. In Figur 4 sind zwei mögliche Varianten einer Folgeoperation F dargestellt. Die erste Variante wird bevorzugt durchgeführt, wenn ein Stillstand H des Fahrzeugs 200 ermittelt wird. In dieser ersten Variante besteht die Folgeoperation F dann darin, dass die Bremseinrichtung 222 in die Bremsstellung BS verbracht wird (Schritt S11.1).

Wenn das Ermitteln E keinen Stillstand H des Fahrzeugs 200 ergibt, weist die Folgeoperation F einen elften Schritt S11.2 und einen zwölften Schritt S12 auf. Im elften Schritt S11.2 wird die Bremseinrichtung 222 in die Bremsstellung BS verbracht, obwohl sich das Fahrzeug 200 nicht im Stillstand H befindet. Dabei wird das Fahrzeug 200 gebremst und zeitgleich der Betrag B der Drehzahl D überwacht. Das Bremsen des Fahrzeugs 200 erfolgt dabei so lange, bis sich das Fahrzeug 200 im Stillstand H befindet. Anschließend wird die Bremseinrichtung 222 im zwölften Schritt S12 in der Bremsstellung BS gehalten. Weiterhin kann die Folgeoperation F auch noch weitere Schritte aufweisen. Beispielsweise kann in einem dreizehnten Schritt S13 ermittelt werden, ob ein Fahrsignal SF bereitgestellt wird, nachdem die Bremseinrichtung 222 in die Bremsstellung BS verbracht wurde. Ein solches Fahrsignal SF kann beispielsweise von einem Retter oder einem Fahrer des Fahrzeugs 200 mittels des Fahrpedals 260 bereitgestellt werden. In Antwort auf das Ermitteln eines Fahrsignals SF kann die Bremseinrichtung 222 dann vorzugsweise in eine Fahrstellung FS versetzt werden (Schritt S14).

### Bezugszeichenliste (Teil der Beschreibung)

- 100: Verfahren
- 200: Fahrzeug
- 202: Nutzfahrzeug
- 204: Fahrzeug-Bussystem
- 205: CAN-Bussystem
- 206: Fahrerassistenzsystem
- 207: Notbremssystem
- 208: Zentralmodul
- 210: Steuereinheit
- 212: Mittel zum Durchführen des Verfahrens
- 214: Recheneinheit
- 220: Bremssystem
- 222: Bremseinrichtung
- 224: Feststellbremse
- 226: Betriebsbremse
- 230, 230a, 230b, 230c, 230d: Raddrehzahlsensor
- 232: Vorderachsbremskreis
- 234: Hinterachsbremskreis
- 236: Feststellbremskreis
- 238: Erster Druckluftvorrat
- 240: Zweiter Druckluftvorrat
- 242: Dritter Druckluftvorrat
- 244a, 244b: Vorderachsbremsaktuatoren
- 246c, 246d: Hinterachsbremsaktuatoren
- 248: Bremswertgeber
- 250: Vorderachsmodulator
- 252a, 252b: Vorderachs-ABS-Ventile
- 254: Hinterachsmodulator
- 256: Feststellbremsmodul
- 258: Feststellbremswertgeber
- 260: Fahrpedal
- A: Ausbleiben
- HA: Hinterachse
- Va: Vorderachse
- B: Betrag
- BN: Notbremsung
- BS: Bremsstellung
- C: Computerprogramm
- CO: Befehle
- D: Drehzahl
- E: Ermitteln
- F: Folgeoperation
- FS: Fahrstellung
- GWD: Drehzahlgrenzwert
- GWZ: Zeitgrenzwert
- H: Stillstand
- NB: Notbremssituation
- NM: Nutzervorgabe
- pBFB: Feststellbremsdruck
- pBHA: Hinterachsbremsdruck
- pBVA: Vorderachsbremsdruck
- pV: Vorratsdruck
- pVBS1: Vorderachs-Bremssteuerdruck
- p0: Entlüftungsdruck
- S: Signal
- SBF: Feststellbremssignal
- SBH: Hinterachsbremssignal
- SBV: Vorderachsbremssignal
- SF: Fahrsignal
- SHBA1: Hinterachsbremsanforderungssignal
- SNA: Notbremsabschlusssignal
- SNB: Notbremssignal
- SR: Raddrehzahlsignal
- S0: Entlüftungssignal
- S1, S2, S3, S3.1, S3.2, S3.3, S4, S5, S6, S7, S8, S9, S10, S11.1,: Schritte
- S11.2, S12, S13, S14 Δt: Zeitspanne
- Z: Zeitraum

## Patentansprüche

1. Verfahren (100) zum Sichern eines Fahrzeugs (200), vorzugsweise Nutzfahrzeugs (202), bei einer Notbremssituation (NB), wobei das Fahrzeug (200) ein Fahrzeug-Bussystem (204) und ein Bremssystem (220) aufweist, das Verfahren aufweisend die Schritte:
- Überwachen von Signalen (S) auf dem Fahrzeug-Bussystem (204);
- Detektieren eines Notbremssignals (SNB), das von einem Fahrerassistenzsystem (206) auf dem Fahrzeug-Bussystem (204) bereitgestellt wird;
- Ermitteln (E), ob sich das Fahrzeug (200) in einem Stillstand (H) befindet;
- Verbringen einer Bremseinrichtung (222) des Bremssystems (220) in eine Bremsstellung (BS), wenn ein Stillstand (H) des Fahrzeugs (200) ermittelt wird, **gekennzeichnet durch**
- Ermitteln eines Ausbleibens (A) des Notbremssignals (SNB), und
- Ermitteln, ob das Ausbleiben (A) des Notbremssignals (SNB) in Antwort auf ein Notbremsabschlusssignal (SNA) erfolgt, das von dem Fahrerassistenzsystem (206) zum Beenden einer Notbremsung (BN) des Fahrzeugs (200) bereitgestellt wird.

2. Verfahren (100) nach Anspruch 1, wobei das Verfahren (100) für den Fall, dass ein Stillstand (H) des Fahrzeugs (200) nicht ermittelt wird, umfasst:
- Ermitteln, ob eine manuelle Nutzervorgabe (NM) bereitgestellt wird;
- Verbringen der Bremseinrichtung (222) des Bremssystems (220) in die Bremsstellung (BS), wenn das Bereitstellen der manuellen Nutzervorgabe (NM) nicht ermittelt wird.

3. Verfahren (100) nach Anspruch 1 oder 2, wobei der Schritt Ermitteln (E), ob sich das Fahrzeug (200) in einem Stillstand (H) befindet, umfasst:
- Erfassen eines Raddrehzahlsignals (SR), das von einem Raddrehzahlsensor (230) oder einem Zentralmodul (208) auf dem Fahrzeug-Bussystem (204) bereitgestellt wird;
- Auswerten des Raddrehzahlsignals (SR); und
- Ermitteln (E) des Stillstands (H) des Fahrzeugs (200), wenn ein Betrag (B) der Drehzahl (D) einen vordefinierten Drehzahlgrenzwert (GWD) unterschreitet, vorzugsweise für einen vordefinierten Zeitraum (Z) unterschreitet.

4. Verfahren (100) nach einem der Ansprüche 1 bis 3, ferner aufweisend:
- Ermitteln einer Zeitspanne (Δt) zwischen dem Detektieren des Notbremssignals (SNB) und dem Ermitteln des Ausbleibens (A) des Notbremssignals (SNB), für den Fall, dass das Ausbleiben (A) des Notbremssignals (SNB) nicht in Antwort auf ein Notbremsabschlusssignal (SNA) erfolgt,
- Vergleichen der Zeitspanne (Δt) mit einem vordefinierten Zeitgrenzwert (GWZ); und
- Durchführen zumindest einer Folgeoperation (F), falls die Zeitspanne (Δt) den vordefinierten Zeitgrenzwert (GWZ) übersteigt.

5. Verfahren (100) nach Anspruch 4, wobei die Folgeoperation (F) umfasst:
- Verbringen der Bremseinrichtung (222) des Bremssystems (220) in die Bremsstellung (BS) zum Bremsen (B) des Fahrzeugs (200) bis zum Stillstand (H), wenn ein Stillstand (H) des Fahrzeugs (200) nicht ermittelt wird, und
- Halten (HA) der Bremseinrichtung (222) in der Bremsstellung (BS), im Anschluss an das Bremsen (B) des Fahrzeugs (200) bis zum Stillstand (H).

6. Verfahren (100) nach Anspruch 4 oder 5, wobei die Folgeoperation (F) umfasst:
- Verbringen der Bremseinrichtung (222) des Bremssystems (220) in die Bremsstellung (BS), wenn das Ermitteln (E) des Stillstands (H) des Fahrzeugs (200) unmöglich ist.

7. Verfahren (100) nach einem der vorstehenden Ansprüche, ferner aufweisend:
- Erfassen eines Fahrsignals (SF) im Anschluss an das Verbringen der Bremseinrichtung (222) des Bremssystems (220) in die Bremsstellung (BS); und
- Verbringen der Bremseinrichtung (222) des Bremssystems (220) in eine Fahrstellung (FS) in Antwort auf das Erfassen des Fahrsignals (SF).

8. Verfahren (100) einem der vorstehenden Ansprüche, wobei das Fahrzeug-Bussystem (204) ein CAN-Bussystem (205) ist.

9. Verfahren (100) nach einem der vorstehenden Ansprüche, wobei das Fahrerassistenzsystem (206) ein autonomes Notbremssystem (207) des Fahrzeugs (200) ist.

10. Verfahren (100) nach einem der vorstehenden Ansprüche, wobei die Bremseinrichtung (222) eine Feststellbremse (224) oder eine Betriebsbremse (226) des Bremssystems (220) ist.

11. Steuereinheit (210) für ein Fahrzeug (200), die Mittel (212) aufweist, um die Schritte des Verfahrens (100) gemäß einem der vorstehenden Ansprüche 1 bis 10 auszuführen.

12. Computerprogramm (C), umfassend Befehle (CO), die bewirken, dass die Steuereinheit (210) gemäß Anspruch 11, das Verfahren (100) gemäß einem der Ansprüche 1 bis 10 ausführt, wenn das Computerprogramm (C) auf einer Recheneinheit (214) ausgeführt wird.

13. Bremssystem (220) für ein Fahrzeug (200), insbesondere Nutzfahrzeug (202) aufweisend eine Steuereinheit (210) gemäß Anspruch 11.

14. Fahrzeug (200), vorzugsweise Nutzfahrzeug (202), aufweisend ein Bremssystem (220) gemäß Anspruch 13.

## Claims

1. Method (100) for securing a vehicle (200), preferably a commercial vehicle (202), in an emergency braking situation (NB), wherein the vehicle (200) has a vehicle bus system (204) and a braking system (220), the method comprising the steps of:
- monitoring signals (S) on the vehicle bus system (204);
- detecting an emergency braking signal (SNB) provided by a driver assistance system (206) on the vehicle bus system (204);
- determining (E) whether the vehicle (200) is at a standstill (H);
- moving a braking device (222) of the braking system (220) into a braking position (BS) if a standstill (H) of the vehicle (200) is determined,
**characterized by**
- determining a failure (A) of the emergency braking signal (SNB), and
- determining whether the failure (A) of the emergency braking signal (SNB) occurs in response to an emergency braking termination signal (SNA) provided by the driver assistance system (206) for ending emergency braking (BN) of the vehicle (200).

2. Method (100) according to claim 1, wherein the method (100) comprises, in the event that a standstill (H) of the vehicle (200) is not determined:
- determining whether a manual user specification (NM) is provided;
- moving the braking device (222) of the braking system (220) into the braking position (BS) if the provision of the manual user specification (NM) is not determined.

3. Method (100) according to claim 1 or 2, wherein the step of determining (E) whether the vehicle (200) is at a standstill (H) comprises:
- detecting a wheel speed signal (SR) provided by a wheel speed sensor (230) or a central module (208) on the vehicle bus system (204);
- evaluating the wheel speed signal (SR); and
- determining (E) the standstill (H) of the vehicle (200) if an amount (B) of the speed (D) falls below a predefined speed limit value (GWD), preferably for a predefined period of time (Z).

4. Method (100) according to any of claims 1 to 3, further comprising:
- determining a time period (Δt) between detecting the emergency braking signal (SNB) and determining the failure (A) of the emergency braking signal (SNB), in the event that the failure (A) of the emergency braking signal (SNB) does not occur in response to an emergency braking termination signal (SNA),
- comparing the time period (Δt) with a predefined time limit value (GWZ); and
- performing at least one follow-up operation (F) if the time period (Δt) exceeds the predefined time limit value (GWZ).

5. Method (100) according to claim 4, wherein the follow-up operation (F) comprises:
- moving the braking device (222) of the braking system (220) into the braking position (BS) for braking (B) the vehicle (200) to a standstill (H) if a standstill (H) of the vehicle (200) is not determined, and
- holding (HA) the braking device (222) in the braking position (BS) following braking (B) of the vehicle (200) until the vehicle comes to a standstill (H).

6. Method (100) according to claim 4 or 5, wherein the follow-up operation (F) comprises:
- moving the braking device (222) of the braking system (220) into the braking position (BS) if it is impossible to determine (E) that the vehicle (200) has come to a standstill (H).

7. Method (100) according to any of the preceding claims, further comprising:
- detecting a driving signal (SF) following moving the braking device (222) of the braking system (220) into the braking position (BS); and
- moving the braking device (222) of the braking system (220) into a driving position (FS) in response to detecting the driving signal (SF).

8. Method (100) according to any of the preceding claims, wherein the vehicle bus system (204) is a CAN bus system (205).

9. Method (100) according to any of the preceding claims, wherein the driver assistance system (206) is an autonomous emergency braking system (207) of the vehicle (200).

10. Method (100) according to any of the preceding claims, wherein the braking device (222) is a parking brake (224) or a service brake (226) of the braking system (220).

11. Control unit (210) for a vehicle (200), comprising means (212) for executing the steps of the method (100) according to any of the preceding claims 1 to 10.

12. Computer program (C) comprising instructions (CO) which cause the control unit (210) according to claim 11 to execute the method (100) according to any of claims 1 to 10 when the computer program (C) is executed on a computing unit (214).

13. Braking system (220) for a vehicle (200), in particular a commercial vehicle (202), comprising a control unit (210) according to claim 11.

14. Vehicle (200), preferably a commercial vehicle (202), comprising a braking system (220) according to claim 13.

## Revendications

1. Procédé (100) permettant de sécuriser un véhicule (200), de préférence un véhicule utilitaire (202), dans une situation de freinage d'urgence (NB), dans lequel le véhicule (200) présente un système de bus de véhicule (204) et un système de freinage (220), le procédé présentant les étapes consistant à :
- surveiller des signaux (S) sur le système de bus de véhicule (204) ;
- détecter un signal de freinage d'urgence (SNB) fourni par un système d'aide à la conduite (206) sur le système de bus de véhicule (204) ;
- déterminer (E) si le véhicule (200) est à l'arrêt (H) ;
- amener un dispositif de freinage (222) du système de freinage (220) dans une position de freinage (BS) lorsqu'un arrêt (H) du véhicule (200) est déterminé, **caractérisé par**
- le fait de déterminer une absence (A) du signal de freinage d'urgence (SNB), et
- le fait de déterminer si l'absence (A) du signal de freinage d'urgence (SNB) se produit en réponse à un signal de fin de freinage d'urgence (SNA) fourni par le système d'aide à la conduite (206) permettant de mettre fin à un freinage d'urgence (BN) du véhicule (200).

2. Procédé (100) selon la revendication 1, dans lequel le procédé (100) comprend, dans le cas où un arrêt (H) du véhicule (200) n'est pas déterminé :
- le fait de déterminer si une consigne utilisateur (NM) manuelle est fournie ;
- le fait d'amener le dispositif de freinage (222) du système de freinage (220) en position de freinage (BS) lorsque la fourniture de la consigne utilisateur (NM) manuelle n'est pas déterminée.

3. Procédé (100) selon la revendication 1 ou 2, dans lequel l'étape consistant à déterminer (E) si le véhicule (200) est à l'arrêt (H) comprend :
- la détection d'un signal de vitesse de rotation de roue (SR) fourni par un capteur de vitesse de rotation de roue (230) ou par un module central (208) sur le système de bus de véhicule (204) ;
- l'évaluation du signal de vitesse de rotation de roue (SR) ; et
- la détermination (E) de l'arrêt (H) du véhicule (200) lorsqu'une grandeur (B) de la vitesse de rotation (D) est inférieure à une valeur limite de vitesse de rotation (GWD) prédéfinie, de préférence pendant une durée (Z) prédéfinie.

4. Procédé (100) selon l'une des revendications 1 à 3, présentant en outre :
- la détermination d'une période (Δt) entre la détection du signal de freinage d'urgence (SNB) et la détermination de l'absence (A) du signal de freinage d'urgence (SNB), dans le cas où l'absence (A) du signal de freinage d'urgence (SNB) ne se produit pas en réponse à un signal de fin de freinage d'urgence (SNA),
- la comparaison de la période (Δt) à une valeur limite de temps (GWZ) prédéfinie ; et
- la mise en œuvre d'au moins une opération de suivi (F) si la période (Δt) dépasse la valeur limite de temps (GWZ) prédéfinie.

5. Procédé (100) selon la revendication 4, dans lequel l'opération de suivi (F) comprend :
- le fait d'amener le dispositif de freinage (222) du système de freinage (220) en position de freinage (BS) permettant de freiner (B) le véhicule (200) jusqu'à l'arrêt (H) lorsqu'un arrêt (H) du véhicule (200) n'est pas déterminé, et
- le fait de maintenir (HA) le dispositif de freinage (222) en position de freinage (BS) à la suite du freinage (B) du véhicule (200) jusqu'à l'arrêt (H).

6. Procédé (100) selon la revendication 4 ou 5, dans lequel l'opération de suivi (F) comprend :
- le fait d'amener le dispositif de freinage (222) du système de freinage (220) en position de freinage (BS) lorsque la détermination (E) de l'arrêt (H) du véhicule (200) est impossible.

7. Procédé (100) selon l'une des revendications précédentes, présentant en outre :
- le fait de détecter un signal de déplacement (SF) à la suite du fait d'amener le dispositif de freinage (222) du système de freinage (220) en position de freinage (BS) ; et
- le fait d'amener le dispositif de freinage (222) du système de freinage (220) dans une position de déplacement (FS) en réponse au fait de détecter le signal de déplacement (SF).

8. Procédé (100) selon l'une des revendications précédentes, dans lequel le système de bus de véhicule (204) est un système de bus CAN (205).

9. Procédé (100) selon l'une des revendications précédentes, dans lequel le système d'aide à la conduite (206) est un système de freinage d'urgence (207) autonome du véhicule (200).

10. Procédé (100) selon l'une des revendications précédentes, dans lequel le dispositif de freinage (222) est un frein de stationnement (224) ou un frein de service (226) du système de freinage (220).

11. Unité de commande (210) pour un véhicule (200) présentant des moyens (212) afin de mettre en œuvre les étapes du procédé (100) selon l'une des revendications précédentes 1 à 10.

12. Programme informatique (C), comprenant des instructions (CO) qui amènent l'unité de commande (210), selon la revendication 11, à mettre en œuvre le procédé (100) selon l'une des revendications 1 à 10 lorsque le programme informatique (C) est mis en œuvre sur une unité de calcul (214).

13. Système de freinage (220) pour un véhicule (200), en particulier un véhicule utilitaire (202), présentant une unité de commande (210) selon la revendication 11.

14. Véhicule (200), de préférence véhicule utilitaire (202), présentant un système de freinage (220) selon la revendication 13.
